# EUROPEAN PATENT APPLICATION

(11) **EP 2 098 353 A1**
(43) Date of publication of application: **09.09.2009**
(21) Application number: 08250786.4
(22) Date of filing: 07.03.2008
(51) Int. Cl.: B29C 47/10, B29B 7/10

(54) **Method and apparatus for producing PVC**

(71) Applicant: Emtelle UK Limited, Hawick Scotland TD9 8LF (GB)
(72) Inventor: The designation of the inventor has not yet been filed
(74) Representative: Vinsome, Rex Martin

(57) **Abstract**

A method for producing extruded polyvinyl chloride (PVC) is disclosed. The method comprises supplying PVC powder and additives in a batch containing predetermined proportions to a high speed mixer (10), mixing and heating the batch in the mixer (10) to produce a PVC/additive blend, conveying the PVC/additive blend directly an extruder (16), and heating and extruding the PVC/additive blend in the extruder (16).

## Description

The present invention relates to a method and apparatus for producing extruded polyvinyl chloride (PVC).

The manufacture of PVC pipes and profiles by means of extrusion is well known. One of the commonest methods of producing PVC pipes and profiles by means of extrusion involves a two-stage process, in which a first, mixing stage is followed by a second, extrusion stage. In the mixing stage, PVC in powder form is weighed and combined with additives such as chalk filler, colouring agents, heat stabilising agents and various process improvement additives, and after weighing, the ingredients are placed in a high speed mixer. The high speed mixer generates frictional heat, raising the temperature of the ingredients to typically between 110°C and 120°C, at which temperature the pores of the PVC powder open and absorb some or all of the additives to create a generally homogeneous blend. When the desired temperature is reached, the blend is discharged into a cooler mixer, which provides a much slower stirring action and is provided with a water cooled jacket, which rapidly cools the blend down to a temperature of 30°C to 40°C, after which it is conveyed to a storage bin for storage until it can be fed to an extruder.

In a second, extruding stage, the PVC blend is conveyed from the storage bin to a twin screw extruder. The screws of the extruder are contained within an outer barrel and the outer barrel and screws are heated, either by electrically heated plates or by hot oil pumped around the barrel or down the central axes of the screws. The blend is fed into the screws of the extruder, and the combination of heat and pressure generated by the screws converts the PVC powder and additive blend into a plasticised melt, which is then extruded through a die orifice to create the desired pipe shape or profile. The extruded melt is then cooled, usually under vacuum. Persons skilled in the art will be very familiar with the process of cooling under vacuum which has become an industry standard method of setting the outside dimensions of PVC pipe and profile.

Although this process has gained universal acceptance, it suffers from the drawback that the heating of the PVC powder and additives and subsequent cooling of the blend after mixing, and then the subsequent heating of the blend during extrusion involves significant energy consumption, which contributes to the cost of production.

One known attempt to overcome this problem involves the use of continuous mixers into which PVC powder and additives are continuously dosed in set proportions, and which continuously discharge the subsequent blend of PVC and additives directly into an extruder without any intermediate cooling step. Although this process reduces energy waste by avoiding a cooling step for storage, which necessitates a subsequent heating step for extrusion, it has not gained significant commercial acceptance, because it suffers from the drawback that it is difficult to control the continuous mixing process, which as a result fails to produce the desired degree of homogeneity in the blend of PVC and additives.

It is also becoming increasingly popular to use chalk filler in blends of PVC and additives produced in such a process, in order to reduce costs by replacing an oil based polymer with a lower cost mineral filler, and to increase the stiffness of the PVC products produced, allowing pipes of a desired stiffness to be made with reduced wall thickness compared with PVC pipes having less or no mineral filler.

However, increasing the proportion of chalk filler in the blend of PVC and additives creates the disadvantage that the capacity of the PVC to absorb all of the additives in the mixing process is reduced, and subsequent conveying of the PVC blend to a storage bin and then to an extruder allows separation of the various ingredients to occur, as a result of which inconsistency in the finished product arises.

An attempt to overcome this problem is known in which mixers are provided which add additional chalk directly above an extruder. The process involves three stages. In a first mixing stage, a blend of PVC and additives with a relatively low proportion of chalk filler is prepared in the conventional manner by first heating, cooling and then storing the PVC/additive blend in a storage bin. In a second mixing stage, the blend is conveyed to an extruder, and additional chalk is stirred into the PVC blend at the extruder. This second stage mixing does not involve the use of a high speed mixer, and therefore does not generate significant frictional heat, but by mixing the additional chalk at a location directly above the extruder, the problem of separation during conveying of the PVC/additive blend is avoided. In a third, extrusion stage, the original PVC/additive blend with the additional chalk is heated and extruded under pressure to create the finished product.

However, this process suffers from the significant disadvantage that the introduction of a third stage to the process requires additional capital investment, additional energy is consumed, and additional maintenance costs are incurred.

Preferred embodiments of the present invention seek to overcome one or more of the above disadvantages of the prior art.

According to an aspect of the present invention, there is provided a method for producing extruded polyvinyl chloride (PVC), the method comprising:-
supplying PVC powder and additives in at least one batch containing predetermined proportions to at least one mixer;
mixing and heating at least one said batch in at least one said mixer to produce a PVC/additive blend;
conveying the PVC/additive blend directly to at least one extruder; and
heating and extruding the PVC/additive blend in at least one said extruder.

By supplying PVC powder and additives in at least one batch containing predetermined proportions to at least one mixer, and conveying the PVC/additive blend directly to at least one extruder, this provides the advantage of enabling greater homogeneity of the blend to be maintained, while avoiding excessive energy use as a result of heating, cooling and subsequent heating steps. By avoiding an intermediate storage step, this also provides the advantage of enabling the batch to be heated to a lower temperature than is necessary in known processes, as a result of which the time needed to heat the batch can be reduced. This enables batches to be processed more rapidly, as a result of which smaller and more cost effective mixers can be used. In addition, the further advantage is provided of more rapid plasticisation of the blend, as a result of which less damage and wear to the extruder occurs. In addition, as a result of the absence of a conveying step which may cause separation of the components of the blend, more chalk filler can be added to the blend, thus saving cost. Furthermore, by avoiding intermediate cooling, storage and heating steps, the PVC/additive blend becomes plasticised more quickly in the extruder, which reduces barrel and screw wear in the extruder because it is found that unplasticised material causes most of the wear. This also reduces the extent to which unplasticised PVC powder is drawn off at any vent zone for drawing off volatile gases, which could cause problems with filters downstream of the vent zone.

At least one said batch may be heated in at least one said mixer to a temperature of between 40°C and 120°C

At least one said additive may comprise at least one mineral filler.

At least one said mineral filler may comprise chalk.

The method may further comprise adding said PVC powder and additives in predetermined proportions to a hopper prior to supply thereof to at least one said mixer.

This provides the advantage of enabling PVC powder and additives to be continuously, or almost continuously, added to at least one said hopper until a batch is completed, and the batch to then be supplied to at least one said mixer, which simplifies the mixing process.

The method may further comprise drawing volatile gases from at least one said extruder by means of suction.

According to another aspect of the invention, there is provided an apparatus for producing extruded polyvinyl chloride PVC, the apparatus comprising:-
supply means for supplying PVC powder and additives in a batch containing predetermined portions to mixing means;
mixing means for mixing and heating the batch to produce a PVC/additive blend;
conveying means for conveying the PVC/additive blend directly to extruding means; and
extruding means for heating and extruding the PVC/additive blend.

The supply means may comprise at least one first hopper located above at least part of said mixing means.

At least one said first hopper may be provided with weighing means for weighing said PVC and additives.

At least one said first hopper may be provided with at least one first discharge valve.

The mixing means may be adapted to heat the batch to a temperature of between 40°C and 120°C.

The extruding means may comprise at least one second hopper for receiving PVC/additive blend from the mixing means.

The mixing means may further comprise at least one second discharge valve for discharging PVC/additive blend into at least one said second hopper.

A preferred embodiment of the invention will now be described, by way of example only and not in any limitative sense, with reference to the accompanying drawing which shows a schematic view of an apparatus embodying the present invention for producing extruded PVC.

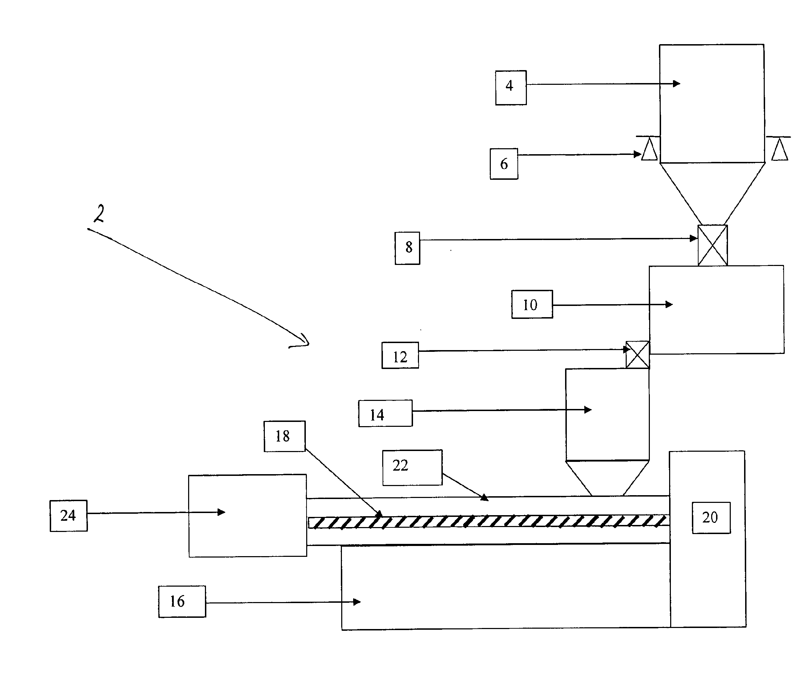

Referring to Figure 1, an apparatus 2 for producing PVC pipes or profiles has a weigh hopper 4 having load cells 6. PVC powder, chalk additives and other additives are conveyed by means of suction from individual storage silos (not shown) into the weigh hopper 4 to form a batch having predetermined proportions. When the PVC powder and additives have been accurately weighed and assembled in the weigh hopper 4, a first discharge valve 8 opens to discharge the ingredients into a high speed mixer 10.

The high speed mixer 10 disperses and heats the PVC powder and additives to produce a generally homogeneous PVC/additive blend. The high speed mixer 10 heats the PVC powder and additives to approximately 80°C, and once the temperature of the PVC/additive blend reaches the desired temperature, a second discharge valve 12 opens to discharge the PVC blend directly into an extruder hopper 14 located above an extruder 16.

The PVC/additive blend is drawn from the extruder hopper 14 into screws 18 of the extruder 16. The screws 18 are driven by a motor 20 and draw the PVC/additive blend along a barrel 22 of the extruder 16. The barrel 22 and/or screws 18 are heated, by means of electrical heaters and/or hot oil flowing along the outside of the barrel 22 and the interior of the screws 18.

The PVC/additive blend is plasticised by means of a combination of heat and pressure as it is conveyed by the screws 18 along the barrel 22, and the plasticised PVC/additive blend is forced out through an extrusion die 24 to produce a finished product, which can then be cooled under.

A vent zone (not shown) uses suction to draw off any volatile gases which may create gas bubbles and points of weakness in the finished product, and any PVC powder drawn off with the volatile gases is removed by means of filters (not shown).

It will be appreciated by persons skilled in the art that the above embodiment has been described by way of example only, and not in any limitative sense, and that various alterations and modifications are possible without departure from the scope of the invention as defined by the appended claims.

## Claims

1. A method for producing extruded polyvinyl chloride (PVC), the method comprising:-
supplying PVC powder and additives in at least one batch containing predetermined proportions to at least one mixer;
mixing and heating at least one said batch in at least one said mixer to produce a PVC/additive blend;
conveying the PVC/additive blend directly to at least one extruder; and
heating and extruding the PVC/additive blend in at least one said extruder.

2. A method according to claim 1, wherein at least one said batch is heated in at least one said mixer to a temperature of between 40°C and 120°C.

3. A method according to claim 1 or 2, wherein at least one said additive comprises at least one mineral filler.

4. A method according to claim 3, wherein at least one said mineral filler comprises chalk.

5. A method according to any one of the preceding claims, further comprising adding said PVC powder and additives in predetermined proportions to a hopper prior to supply thereof to at least one said mixer.

6. A method according to any one of the preceding claims, further comprising drawing volatile gases from at least one said extruder by means of suction.

7. An apparatus for producing extruded polyvinyl chloride PVC, the apparatus comprising:
supply means for supplying PVC powder and additives in a batch containing predetermined portions to mixing means;
mixing means for mixing and heating the batch to produce a PVC/additive blend;
conveying means for conveying the PVC/additive blend directly to extruding means; and
extruding means for heating and extruding the PVC/additive blend.

8. An apparatus according to claim 7, wherein the supply means comprises at least one first hopper located above at least part of said mixing means.

9. An apparatus according to claim 8, wherein at least one said first hopper is provided with weighing means for weighing said PVC and additives.

10. An apparatus according to claim 8 or 9, wherein at least one said first hopper is provided with at least one first discharge valve.

11. An apparatus according to any one of claims 7 to 10, wherein the mixing means is adapted to heat the batch to a temperature of between 40°C and 120°C.

12. An apparatus according to any one of claims 7 to 11, wherein the extruding means comprises at least one second hopper for receiving PVC/additive blend from the mixing means.

13. An apparatus according to claim 12, wherein the mixing means further comprises at least one second discharge valve for discharging PVC/additive blend into at least one said second hopper.
